# EUROPÄISCHE PATENTSCHRIFT

(11) **EP 1 744 138 B1**
(45) Veröffentlichungstag und Bekanntmachung des Hinweises auf die Patenterteilung: **03.06.2009**
(21) Anmeldenummer: 06115078.5
(22) Anmeldetag: 07.06.2006
(51) Int. Cl.: G01L 9/00, G01L 19/00

(54) **Mikromechanische Vorrichtung mit zwei Sensorstrukturen und Verfahren zur Herstellung einer mikromechanischen Vorrichtung**
Micromechanical device with two sensor structures and method for manufacturing a micromechanical device
Appareil micromécanique avec deux structures capteurs et procédé de production d'un appareil micromécanique

(30) Priorität: 13.07.2005 DE 102005032635
(43) Veröffentlichungstag der Anmeldung: 17.01.2007
(73) Patentinhaber: ROBERT BOSCH GMBH, 70442 Stuttgart (DE)
(72) Erfinder: Benzel, Hubert, 72124 Pliezhausen (DE); Schelling, Christoph, 72762 Reutlingen (DE)

(56) Entgegenhaltungen:
- EP-A- 1 561 724
- DE-A1- 4 125 467
- DE-A1- 4 206 174
- DE-A1- 4 410 794
- DE-A1- 19 626 083
- FR-A- 2 641 612
- US-A- 5 313 836
- US-B1- 6 178 820
- US-B1- 6 293 154

## Beschreibung

### Stand der Technik

Die Erfindung geht aus von einer mikromechanischen Vorrichtung nach der Gattung des Hauptanspruchs 1. Aus der Druckschrift DE 103 23 559 A1 ist bereits eine mikromechanische Vorrichtung, insbesondere ein Drucksensor, bekannt, wobei die Funktionalität der Sensorstruktur des Drucksensors auf einem piezoresistiven Wandlerprinzip zur Umwandlung einer mechanischen Kraft in ein elektrisches Signal beruht. Nachteilig ist hieran, dass zur Messung von mehreren unterschiedlichen, mechanischen Größen, beispielsweise zur Messung eines Drucks und eine Beschleunigung, eine Mehrzahl von Sensoren notwendig ist, die darüber hinaus üblicherweise noch auf unterschiedlichen Wandlerprinzipien beruhen und daher nicht auf einem Chip monolithisch integriert darstellbar sind. Anwendungen, bei denen eine gleichzeitige Erfassung einer Mehrzahl von unterschiedlichen mechanischen Größen, insbesondere Druck und Beschleunigung wünschenswert sind, fmden sich beispielsweise bei der Reifendruckmessung oder auch bei der Seitenaufprallsensierung im Automobilbereich. Bei der Verwendung von auf unterschiedlichen Wandlerprinzipien beruhenden Sensoren zur Messung dieser unterschiedlichen mechanischen Größen ist es daher notwendig, bis zu 4 unterschiedliche Chips für diese Anwendungen vorzusehen, nämlich jeweils ein Chip für den Beschleunigungssensor (beispielsweise kapazitive Messung) und den Drucksensor (piezoresistive Messung) sowie jeweils eines Auswerteschaltkreises für den Beschleunigungssensor und den Drucksensor. Solche Multichip-Anwendungen sind jedoch relativ kostenintensiv, was erfindungsgemäß vermieden werden soll.

US 6 293 154 B1 offenbart eine Druckmessanordnung mit Schwingungskompensation. EP 1 561 724 A1, deren Prioritätsdatum 06.02.2004 und Offenlegungsdatum 10.08.2005 ist, offenbart eine mikromechanische Vorrichtung mit einem Drucksensor und einem Beschleunigungssensor.

### Vorteile der Erfindung

Die erfindungsgemäße mikromechanische Vorrichtung mit den Merkmalen des Hauptanspruchs hat dem gegenüber den Vorteil, dass eine erste und eine zweite Sensorstruktur monolithisch integriert auf einem gemeinsamen Halbleitermaterial vorgesehen sind, was zum einen die Kosten sowie den benötigten Bauraum verringert als auch die Funktionalität wegen kleineren Verbindungswegen, geringerer Übergangswiderstände etc. verbessert und durch den Einsatz des gleichen Wandlerprinzips, nämlich insbesondere eines piezoresistiven Wandlerprinzips, für beide Sensorstrukturen eine kostengünstigere Gesamtlösung möglich macht. Auch können beide Sensorstrukturen mit einem einzigen, zweikanaligen Auswerteschaltkreis monolithisch integriert werden, so dass zum einen der Herstellungsaufwand für die mikromechanische Vorrichtung geringer ist und zum anderen die Auswertung der erzeugten Signale verbessert wird.

Durch die in den Unteransprüchen aufgeführte Maßnahmen sind vorteilhafte Weiterbildungen und Verbesserungen der in den nebengeordneten Ansprüchen angegebenen mikromechanischen Vorrichtung bzw. des Verfahrens möglich.

Besonders vorteilhaft ist, dass das Wandlerprinzip auf dem piezosensitiven Effekt, insbesondere dem piezoresistiven Effekt, in einer Mehrzahl von Sensorbereichen des Halbleitermaterials beruht. Hierdurch ist es in besonders vorteilhafter Weise möglich, eine große Empfindlichkeit der Sensorstrukturen mit einer kostengünstigen Herstellungsweise der mikromechanischen Vorrichtung zu verbinden. Es ist ferner so, dass ein Wandlerprinzip auf Basis des piezoresistiven Effekts weniger anfällig für die durch statische Aufladung auftretenden Probleme ist, so dass die erfindungsgemäße Vorrichtung betriebssicherer gestaltet werden kann. Es ist ferner so , dass die erste Sensorstruktur eine in das Halbleitermaterial eingebrachte erste Membran und die zweite Sensorstruktur eine in das Halbleitermaterial eingebrachte zweite Membran aufweist, wobei jede der Membranen wenigstens einen Sensorbereich umfaßt oder mit wenigstens einem Sensorbereich verbunden ist. Mittels der Membranen ist es erfindungsgemäß in einfacher und robuster Weise möglich, eine auf mechanische Einflußgröße sensible Struktur herzustellen, so dass auf der Basis des piezoresistiven Wandlerprinzips Sensorstrukturen erzeugt werden können, die besonders robust und betriebssicher sind. Weiterhin ist es so, dass die erste Sensorstruktur eine hermetisch abgeschlossene erste Kavität unterhalb der ersten Membran aufweist und die zweite Sensorstruktur eine mit der zweiten Membran verbundene seismische Masse aufweist, wobei die zweite Membran geschlossen ist. Die seismische Masse ist vorzugsweise hermetisch gekapselt und/oder die zweite Membran ist gestützt vorgesehen, insbesondere mittels wenigstens einer seitlichen Einschnürung . Hierdurch ist es mit verhältnismäßig geringem Aufwand und unter Verwendung von robust herstellbaren Strukturen möglich, einen Drucksensor und einen auf eine Trägheitskraft hin empfindlichen Sensor, insbesondere einen Beschleunigungssensor zur Messung einer linearen Beschleunigung oder zur Messung einer Drehbeschleunigung bzw. einer Drehrate, zur realisieren. Die Stützung der Membran bewirkt, dass es bei der Bildung der zumindest zwischenzeitlich Vakuum aufweisenden Kavität nicht zu einem Verkleben der Sensormembran mit dem darunterliegenden Substrat kommt. Erfindungsgemäß ist ganz besonders vorteilhaft, dass in das Halbleitermaterial eine Schaltungsstruktur einer elektronischen Schaltung zur Auswertung und/oder Verarbeitung von von den Sensorstrukturen ausgehenden oder von den Sensorstrukturen modifizierten Signalen eingebracht ist, wobei die Erzeugung der Schaltungsstruktur vorzugsweise zumindest teilweise gleichzeitig mit der Erzeugung der Sensorstrukturen vorgesehen ist. Hierdurch ist es möglich, einen kompletten, kombinierten Sensor bzw. eine komplette, kombinierte Sensoreinheit herzustellen, die sowohl die auf die zu messenden, mechanischen Größen empfmdlichen Strukturen aufweist, als auch eine Vorverarbeitung der Sensorsignale durchführt, ggf. sogar mit einer gewissen Intelligenz. Unter einer intelligenten Vorverarbeitung wird in diesem Zusammenhang verstanden, dass bereits eine Beziehung zwischen den von den die unterschiedlichen, mechanischen Größen messenden Sensorstrukturen ausgehenden Signalen hergestellt wird, so dass beispielsweise unplausible Kombinationen von Druck- und Beschleunigungswerten entweder nicht weitergeleitet werden oder zumindest deren Unplausibilität angezeigt bzw. signalisiert wird. Erfindungsgemäß ist es besonders bevorzugt, dass die Membranen im wesentlichen ein monokristallines Material, vorzugsweise monokristallines Silizium, umfassen. Hierdurch ist es mit besonders geringem Kostenaufwand möglich, Piezosensoren herzustellen, die bereits auf geringe Auslenkungen der Membran reagieren und damit mit einer besonders hohen Empfindlichkeit arbeiten.

Das erfindungsgemäße Verfahren mit den Merkmalen des nebengeordneten unabhängigen Verfahrensanspruchs 6 hat gegenüber dem Stand der Technik den Vorteil, dass gleichzeitig die Membranen für die erste Sensorstruktur als auch für die zweite Sensorstruktur zur Messung zweier unterschiedlicher mechanischer Größen, insbesondere Druck und lineare Beschleunigung, hergestellt werden, so dass die Herstellung der erfindungsgemäßen Vorrichtung besonders kostengünstig realisierbar ist. Besonders vorteilhaft ist es, dass die seismische Masse aus Substratmaterial, d. h. aus dem Halbleitermaterial, besteht. Bevorzugt ist beim erfindungsgemäßen Verfahren ferner, dass zur Einbringung der Membranen in das Halbleitermaterial ein Teilbereich des Halbleitermaterials porös geätzt wird, vorzugsweise mit einer Porosität von mehr als 50%, bevorzugt von mehr als 80%, und dass die erste Kaverne und eine zweite Kaverne durch Umlagern bzw. Herausätzen des Halbleitermaterials im porös geätzten Teilbereich gebildet werden. Hierdurch ist es erfindungsgemäß vorteilhaft möglich, dass die Kavernen ohne die Einbringung von Zugängen und ohne die Anwendung von Unterätzungsverfahren erzeugt werden können. Erfindungsgemäß ist es ferner vorteilhaft, dass nach der Bildung der zweiten Kaverne eine Ätzstopschicht, vorzugsweise Siliziumoxid, im Bereich der zu bildenden seismischen Masse in die zweite Kaverne einbracht wird. Hierdurch kann die Strukturierung der seismischen Masse, bevorzugt mittels einer volumenmikromechanischen Bearbeitungsabfolge, von der Rückseite des Halbleitermaterials aus besonders präzise erfolgen.

Ein weiterer Gegenstand der vorliegenden Erfindung ist ein kombinierter Beschleunigungs- und Drucksensor gemäß Anspruch 9 mit einer erfindungsgemäßen mikromechanischen Vorrichtung, wobei der kombinierte Beschleunigungs- und Drucksensor den Vorteil hat, dass durch den Einsatz des gleichen ― bevorzugt eines piezoresistiven ― Wandlerprinzips für beide Sensierungen eine kostengünstige Gesamtlösung mit einem einzigen, zweikanaligen Auswerte-ASIC möglich wird, wobei insgesamt für den kombinierten Beschleunigungs- und Drucksensor entweder nur zwei Chips benötigt werden oder sogar eine monolithische Integration der beiden Sensorstrukturen zusammen mit der Auswerteschaltung möglich ist. Weiter ist bei dem erfindungsgemäßen Beschleunigungs- und Drucksensor eine Detektion verschiedener Komponenten der linearen Beschleunigung bzw. der Drehbeschleunigung möglich, etwa die Detektion einer zur Substratebene der Vorrichtung senkrechten linearen Beschleunigung oder einer zur Substratebene der Vorrichtung parallelen Drehbeschleunigung. Die Substratebene entspricht hierbei der Ebene der größten Erstreckung des Halbleitermaterials.

Ausführungsbeispiele der Erfindung sind in der Zeichnung dargestellt und in der nachfolgenden Beschreibung näher erläutert.

Es zeigen
**Figuren 1 bis 8** eine erste Bearbeitungsabfolge zur Herstellung einer erfindungsgemäßen mikromechanischen Vorrichtung bzw. die Darstellung eines erfindungsgemäßen Verfahrens zur Herstellung der Vorrichtung,
**Figur 9** eine alternative Ausführung der mikromechanischen Vorrichtung, hergestellt mittels der ersten Bearbeitungsabfolge,
**Figuren 10 bis 13** eine zweite Bearbeitungsabfolge zur Herstellung einer erfindungsgemäßen, mikromechanischen Vorrichtung und
**Figuren 14 und 15** zwei alternative Ausführungen der seismischen Masse.

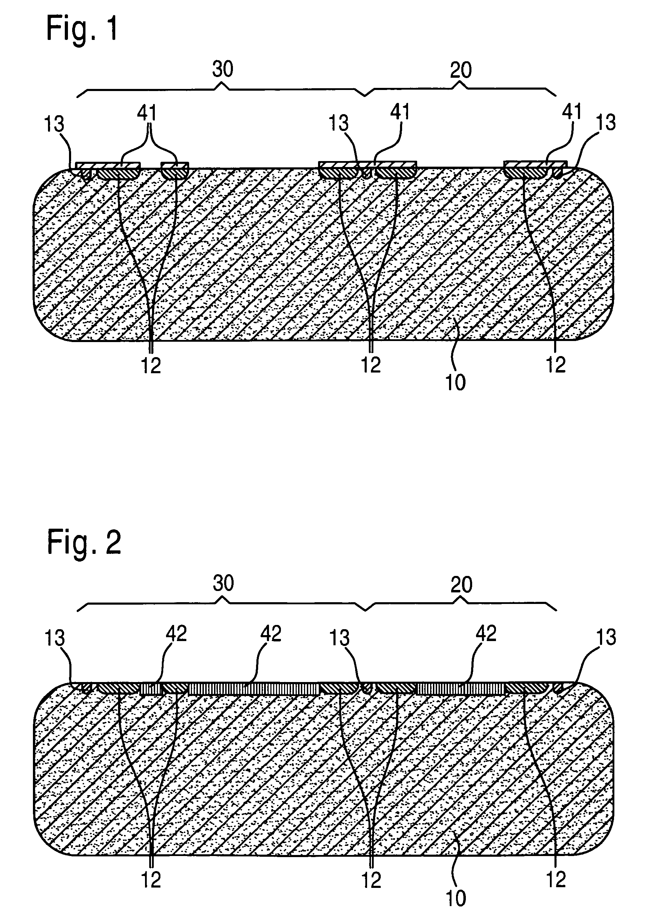

In **Figur 1** ist eine erste vorläufige Struktur für eine erfindungsgemäße, mikomechanische Vorrichtung dargestellt. Auf einem Halbleitermaterial 10, welches insbesondere als Siliziumwafer vorgesehen ist, sind verschiedene Dotierungsbereiche 12 eingebracht. Erfindungsgemäß ist das Halbleitermaterial 10 beispielsweise ein p-Substrat und die eingebrachten Dotierungen 12 sind vergleichsweise stark negativdotierte Dotierungsbereiche. Weitere Dotierungsbereiche sind als so genannte erste Wannendotierungsbereiche 13 ebenfalls in das Halbleitermaterial 10 eingebracht und dienen als elektrische Isolierung zwischen verschiedenen Bereichen bzw. Strukturen des Halbleitermaterials 10. So ist bereits in der Figur 1 erkennbar ein erster Bereich 20 und ein zweiter Bereich 30 dargestellt, in welchen bei der fertiggestellten, erfindungsgemäßen mikromechanischen Vorrichtung eine erste Sensorstruktur 20 bzw. eine zweite Sensorstruktur 30 realisiert sein werden, was sich aus der Beschreibung der nachfolgenden Figuren ergeben wird. Auf das Halbleitermaterial 10 mit seinen Dotierungen 12 und 13 werden in einem nachfolgenden Schritt Masken 41 aufbracht, die der Abgrenzung von so genannten Anodisierungsbereichen dienen.

In **Figur 2** ist eine weitere Vorläuferstruktur der erfindungsgemäßen Vorrichtung dargestellt, wobei gleiche Bezugszeichen aus Figur 1 wiederum gleiche Teile bzw. Bereiche der Vorrichtung bzw. des Halbleitermaterials darstellen. Auch in den nachfolgenden Figuren bezeichnen gleiche Bezugszeichen wiederum gleiche Teile bzw. Bereiche der Vorrichtung. Die von der Anodisierungsmaske 41 in Figur 1 nicht abgedeckten Bereiche werden mittels eines Anodisierverfahrens porös geätzt, was in der Figur 2 mit den Bezugszeichen 42 bezeichnet ist.

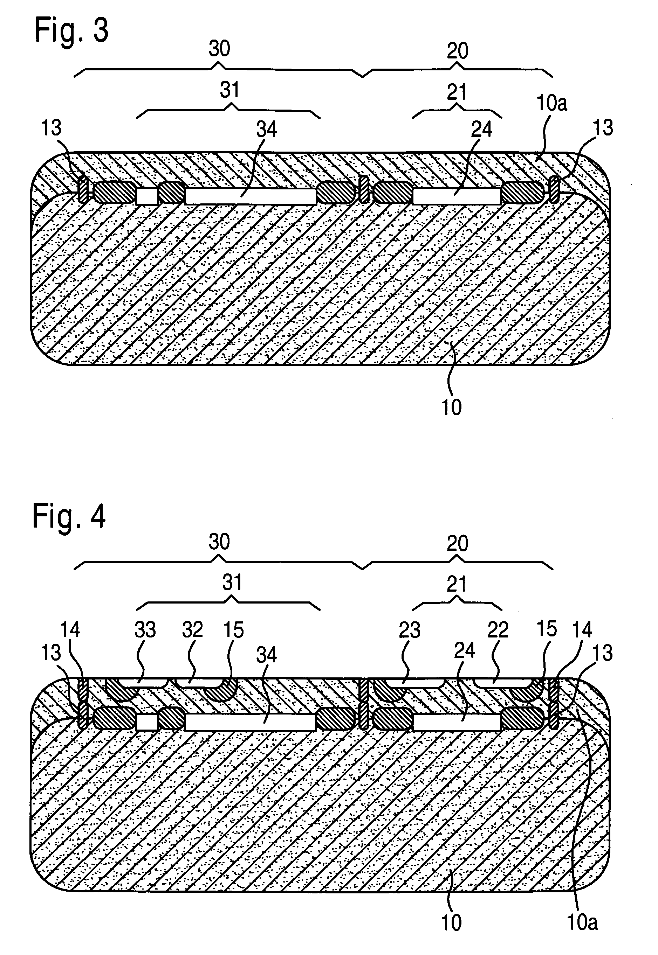

In **Figur 3** ist eine weitere Vorstufe der erfindungsgemäßen Vorrichtung dargestellt, wobei die anodisierten Bereiche 42 aus Figur 2 mit einer, vorzugsweise monokristallinen Epitaxieschicht 10a bedeckt sind. Diese Epitaxieschicht 10a dient oberhalb der Bereiche 42 aus Figur 2 als Membran. Im Bereich der ersten Sensorstruktur 20 bildet die Epitaxieschicht 10a eine erste Membran 21 und im Bereich der zweiten Sensorstruktur 30 bildet die Epitaxieschicht 10a eine zweite Membran 31. Nach der Abscheidung der Epitaxieschicht wird durch eine thermische Behandlung eine Umlagerung des Halbleitermaterials in den porösen Bereichen 42 bewirkt, wobei sich eine erste Kavität 24 und eine zweite Kavität 34 bildet. Die Membranen 21, 31 befinden sich oberhalb der jeweiligen Kavitäten 24, 34. Sowohl die Herstellung der porösen Siliziumbereiche 42 aus Figur 2 als auch die Herstellung der Kavitäten 24, 34 werden entsprechend eines in der deutschen Offenlegungsschrift DE 100 32 579 A1 angegebenen Verfahrens durchgeführt. In Bezug auf das Verfahren zur Anodisierung, d.h. zur Herstellung von porösen Bereichen in dem Halbleitermaterial 10 sowie zur Abscheidung einer vorzugsweise monokristallinen Epitaxieschicht 10a und der Herstellung der Kavitäten 24, 34, wird daher diese Druckschrift als Referenz in die vorliegende Beschreibung aufgenommen. In Figur 3 und in den weiteren Figuren sind die Dotierungsbereiche 12 im Halbleitermaterial 10 nicht mehr eigens mit Bezugszeichen angegeben.

In **Figur 4** ist eine weitere Vorläuferstruktur der erfindungsgemäßen Vorrichtung dargestellt, wobei in die Epitaxieschicht 10a weitere Diffusionsbereiche 15 eingebracht werden sowie weiterhin auch die eigentlichen Sensorbereiche 22, 23, 32, 33 eingebracht werden. Diese Sensorbereiche werden erfindungsgemäß in solchen Materialien realisiert, die einen großen piezoresistiven Effekt bei vorgegebener Materialspannung hervorrufen. Die Sensorbereiche 22, 23, 32, 33 sind bevorzugt an solchen Stellen der Membranen 21, 31 angeordnet, die große mechanische Spannungen bei einer Durchbiegung der Membran aufweisen. Hierbei sind ein erster und zweiter Sensorbereich 22, 23 Teil der ersten Sensorstruktur 20 und es ist ein dritter und vierter Sensorbereich 32, 33 Teil der zweiten Sensorstruktur 30. Die Diffusionsbereiche 15 dienen dabei als niederohmige Zuleitungen zu den Sensorbereichen 22, 23, 32, 33.

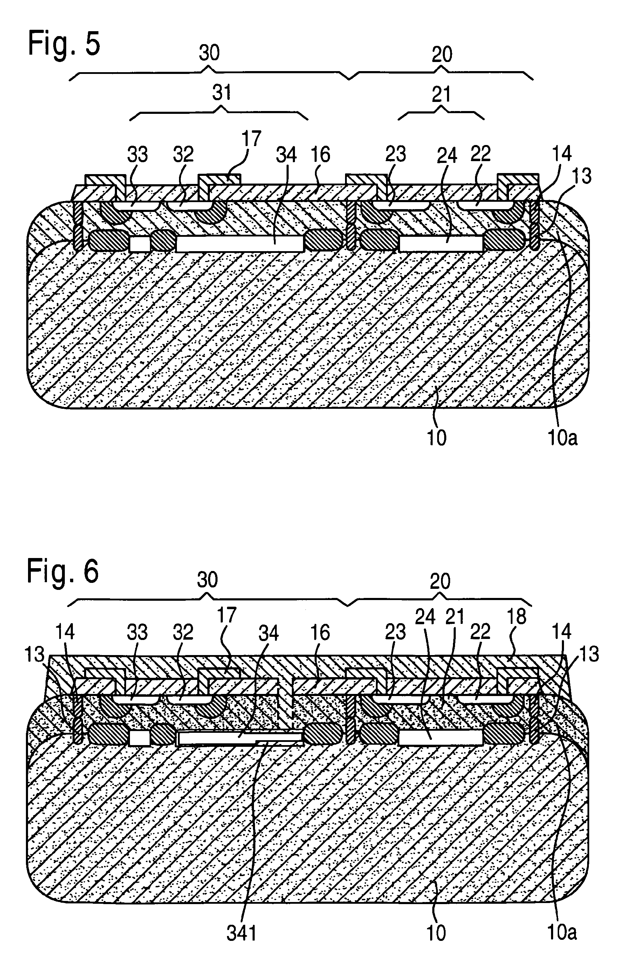

In **Figur 5** ist eine weitere Vorläuferstruktur der erfindungsgemäßen Vorrichtung dargestellt, wobei auf die Epitaxieschicht 10a eine Passivierungsschicht 16 sowie Anschlußmetallisierungen 17 aufgebracht sind. Die Anschlußmetallisierungen 17 sind insbesondere temperaturstabil ausgeführt.

In **Figur 6** ist eine weitere Vorläuferstruktur der erfindungsgemäßen Vorrichtung dargestellt, wobei ein Zugangsbereich 36 zu der zweiten Kavität 34 in die Vorläuferstruktur gemäß der Figur 5 eingebracht wird und anschließend eine Verschlußschicht 18 auf die Struktur aufgebracht wird, die im Bereich der später zu strukturierenden seismischen Masse eine Ätzstopschicht 341 in der zweiten Kavität 34 bildet und den Zugangsbereich 36 zur zweiten Kavität 34 verschließt. Bei der Verschlußschicht 18 handelt es sich beispielsweise um eine oxidische Verschlußschicht, hergestellt beispielsweise durch Abscheidung gemäß dem TEOS-Prozeß, bei dem TEOS (TetraEthylOrthoSilikat) abgeschieden wird, insbesondere um Siliziumoxid. Weiterhin wird die Zugangsöffnung 36 zur zweiten Kavität 34, insbesondere mittels eines Trenchprozesses hergestellt.

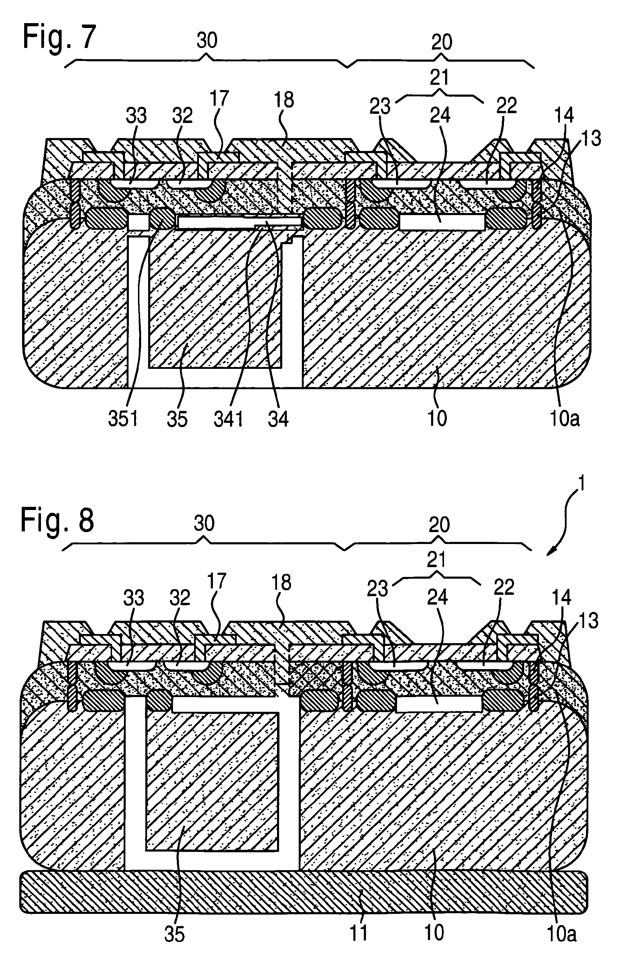

In **Figur 7** ist eine weitere Vorläuferstruktur einer erfindungsgemäßen Vorrichtung dargestellt, wobei auf der Vorderseite der Struktur, d.h. in der Figur 7 im oberen Bereich, eine zumindest teilweise Freilegung der Metallisierungen 17 bewirkt und wobei von der Rückseite des Halbleitermaterials 10 her die Strukturierung der seismischen Masse 35, insbesondere mittels Trenchätzen erfolgt. Dieser Ätzvorgang zur Strukturierung der seismischen Masse 35 wird an der Ätzstopschicht 341 gestoppt. In einem weiteren Ätzschritt wird dann noch die Ätzstopschicht 341 entfernt und somit die seismische Masse 35 an ihrem Aufhängungspunkt 351 an der zweiten Membran 31 freigelegt. Das Entfernen der oxidischen Ätzstopschicht 341 kann insbesondere mittels HF-Dampfätzen erfolgen.

In **Figur 8** ist die fertiggestellte mikromechanische Vorrichtung 1 abgebildet, wobei zum Schutz der seismischen Masse noch ein zweites Substratmaterial 11 auf der Rückseite des Halbleitermaterials 10 aufgebracht wird.

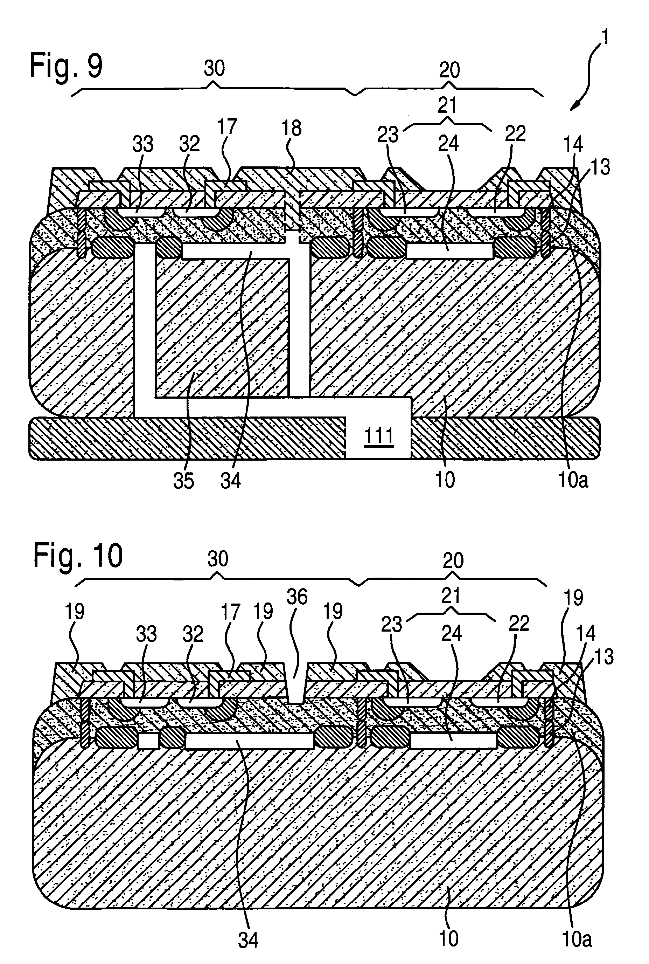

In **Figur 9** ist eine zweite Ausführungsform der erfindungsgemäßen mikromechanischen Vorrichtung 1 dargestellt, wobei die zweite Kavität 34 von der Rückseite her, d. h. vom weiteren Substratmaterial 11 her mittels einer Öffnung 111 geöffnet ist.

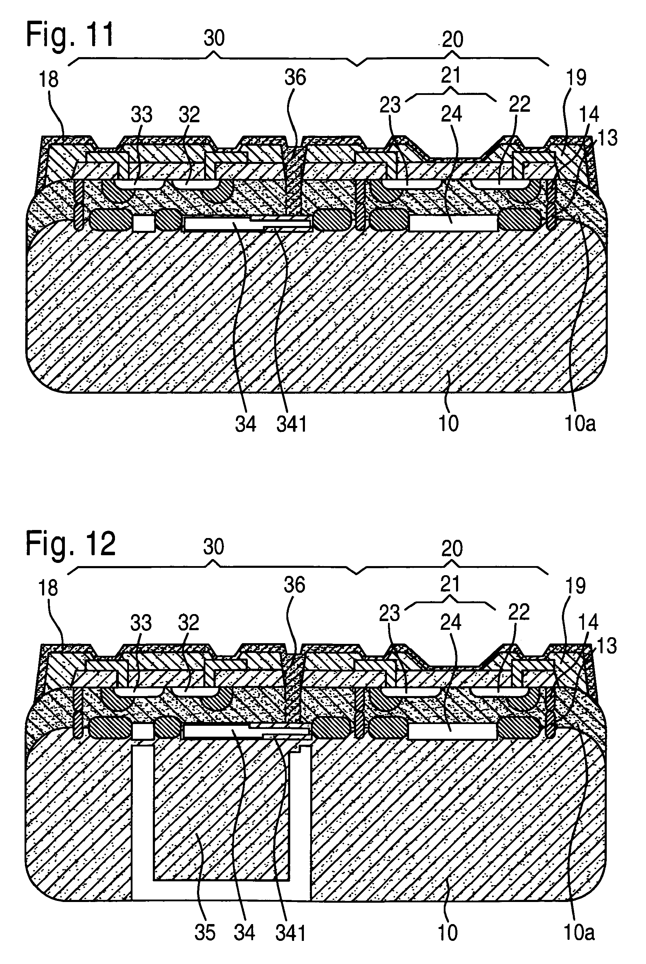

In **Figur 10** ist eine Vorläuferstruktur eines alternativen Herstellungsverfahrens zur Herstellung einer erfindungsgemäßen mikromechanischen Vorrichtung 1 dargestellt. Hierbei sind die Schritte der Figuren 1 bis 6 bei dem alternativen Herstellungsverfahren identisch, jedoch erfolgt vor dem Einbringen des Zugangsbereichs 36 zur zweiten Kavität 34 und dem Abscheiden der Ätzstopschicht 341 die Abscheidung einer Passivierungsschicht 19, insbesondere in Form eines Nitrids, beispielsweise Siliziumnitrids. Anschließend wird auch bei dieser Ausführungsform der Zugangsbereich 36 zur zweiten Kavität 34, insbesondere mittels Trenchätzen erzeugt, wobei dieser Zugangsbereich 36 anschließend wieder, vgl. **Figur 11**, mit der Verschlußschicht 18, insbesondere Siliziumoxid, zur Bildung der Ätzstopschicht 341 verschlossen wird, was in **Figur 11** dargestellt ist.

In **Figur 12** ist eine weitere Vorläuferstruktur der erfindungsgemäßen Vorrichtung dargestellt. Im Vergleich zur Darstellung der **Figur 11** wurde wiederum die seismische Masse 35 von der Rückseite des Halbleitermaterials her freigelegt.

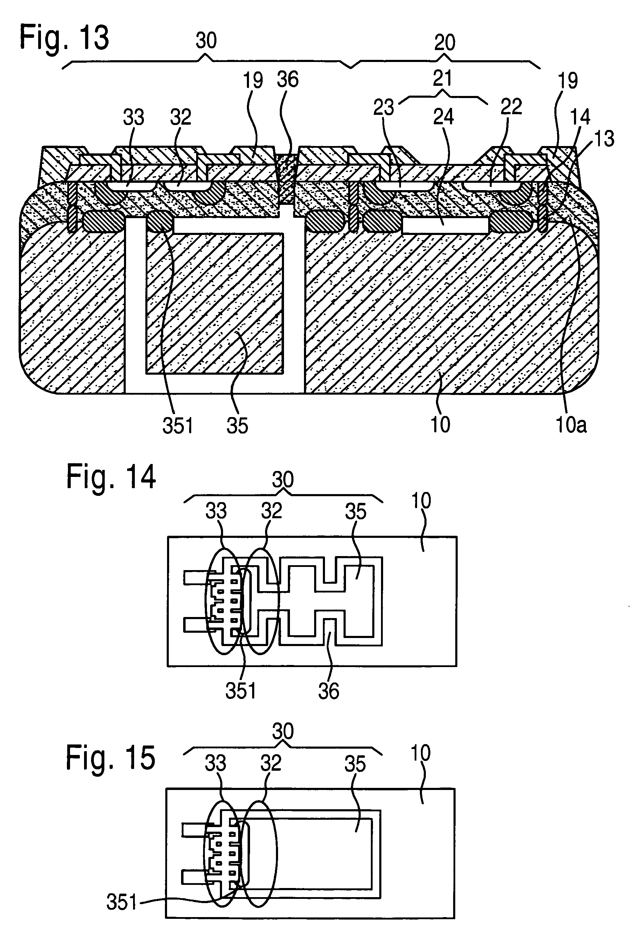

In **Figur 13** ist eine weitere Vorläuferstruktur der erfindungsgemäßen Vorrichtung dargestellt, wobei die seismische Masse 35 vollständig freigelegt ist und nur noch an ihren Verbindungspunkt 351 mit der zweiten Membran 31 verbunden ist. Diese Freilegung der seismischen Masse 35 wird durch Abätzen der Ätzstopschicht 341 (vgl. Figur 12) beispielsweise durch einen selektiven Nassprozess mit AMS5 bewirkt. Hierbei wird lediglich das Oxid geätzt aber nicht das Nitrid, das Silizium oder das Metall. Daher wird auch auf der Oberseite der Vorrichtung die Oxidschicht 18 (vgl. ebenfalls Figur 12) im wesentlichen weggeätzt (außer ggf. im Bereich der Zugangsöffnung 36 zur zweiten Kavität 34) so dass lediglich die Passivierungsschicht 19 bzw. die Nitridschicht 19 verbleibt.

In den **Figuren 14 und 15** sind Ansichten von unten, d.h. von der Rückseite des Halbleitermaterials 10 her auf die seismische Masse 35 dargestellt. Erkennbar sind zum einen der Bereich der Aufhängung 351 der seismischen Masse 35 an der zweiten Membran 31 sowie die Bereiche der Sensorelemente 32, 33 auf der Vorderseite der Vorrichtung. Durch das Vorsehen von Einschnürungen 36 bei der Herstellung der zweiten Membran 31 d. h. solche Bereiche, in denen keine Anodisierung und folglich keine Kavität entsteht, ist es möglich, die zweite Membran 31 an diesen Stellen abzustützen, so dass sie sich durch die Bildung des in der nicht geöffneten zweiten Kavität 34 entstehenden Vakuums nicht nach unten bis zum Untergrund der zweiten Kavität 34 durchbiegt. Dies kann dazu führen, dass die zweite Membran 31 auf ihrem Untergrund anklebt und somit die Vorrichtung nicht mehr brauchbar ist.

## Patentansprüche

1. Mikromechanische Vorrichtung (1) mit einem Halbleitermaterial (10),
- wobei das Halbleitermaterial (10) eine erste Sensorstruktur (20) aufweist,
- wobei die erste Sensorstruktur (20) zur Erfassung eines Druckes vorgesehen ist,
- wobei die Funktionalität der ersten Sensorstruktur (20) auf einem vorgegebenen Wandlerprinzip beruht,
- wobei das Halbleitermaterial (10) eine zweite Sensorstruktur (30) aufweist, wobei die zweite Sensorstruktur (30) zur Erfassung einer Beschleunigung vorgesehen ist,
- wobei die Funktionalität der zweiten Sensorstruktur (30) auf dem gleichen vorgegebenen Wandlerprinzip beruht,
- wobei die erste Sensorstruktur (20) eine in das Halbleitermaterial (10) eingebrachte erste Membran (21) und die zweite Sensorstruktur (30) eine in das Halbleitermaterial (10) eingebrachte zweite Membran (31) aufweist, wobei jede der Membranen (21, 31) wenigstens einen Sensorbereich (22, 23, 32, 33) umfasst oder mit wenigstens einem Sensorbereich (22, 23, 32, 33) verbunden ist,
**dadurch gekennzeichnet, dass**
die erste Sensorstruktur (20) eine hermetisch abgeschlossene erste Kavität (24) in dem Halbleitermaterial (10) unterhalb der ersten Membran (21) aufweist und dass die zweite Sensorstruktur (30) eine mit der zweiten Membran (31) verbundene seismische Masse (35) aufweist, wobei die zweite Membran (31) geschlossen ist.

2. Vorrichtung (1) nach Anspruch 1, **dadurch gekennzeichnet, dass** das Wandlerprinzip auf dem piezoresistiven Effekt in einer Mehrzahl von Sensorbereichen (22, 23, 32, 33) des Halbleitermaterials (10) beruht.

3. Vorrichtung (1) nach einem der vorhergehenden Ansprüche, **dadurch gekennzeichnet, dass** die seismische Masse (35) hermetisch gekapselt ist und/oder dass die zweite Membran (31) gestützt vorgesehen ist, insbesondere mittels wenigstens einer seitlichen Einschnürung (36).

4. Vorrichtung (1) nach einem der vorhergehenden Ansprüche, **dadurch gekennzeichnet, dass** in das Halbleitermaterial (10) eine Schaltungsstruktur einer elektronischen Schaltung zur Auswertung und/oder Verarbeitung von den Sensorstrukturen (20, 30) ausgehenden oder von den Sensorstrukturen (20, 30) modifizierten Signalen eingebracht ist, wobei vorzugsweise die Erzeugung der Schaltungsstruktur zumindest teilweise gleichzeitig mit der Erzeugung der Sensorstrukturen (20, 30) vorgesehen ist.

5. Vorrichtung (1) nach einem der vorhergehenden Ansprüche, **dadurch gekennzeichnet, dass** die Membranen (21, 31) im wesentlichen ein monokristallines Material, vorzugsweise monokristallines Silizium, umfassen.

6. Verfahren zur Herstellung einer Vorrichtung (1) gemäß einem der vorhergehenden Ansprüche, **dadurch gekennzeichnet, dass** in einem ersten Schritt die Membranen (21, 31) in das Halbleitermaterial (10) eingebracht werden, vorzugsweise mittels einer oberflächenmikromechanischen Bearbeitungsabfolge, und dass in einem zweiten Schritt die seismische Masse (35) strukturiert wird, vorzugsweise mittels einer volumenmikromechanischen Bearbeitungsabfolge.

7. Verfahren nach Anspruch 6, **dadurch gekennzeichnet, dass** zur Einbringung der Membranen (21, 31) in das Halbleitermaterial (10) ein Teilbereich des Halbleitermaterials (10) porös geätzt wird, vorzugsweise mit einer Porosität von mehr als 50%, bevorzugt von mehr als 80%, und dass die erste Kavität (24) und eine zweite Kavität (34) durch Umlagern bzw. Herauslösen von Teilen des Halbleitermaterials im porös geätzten Teilbereich gebildet wird.

8. Verfahren nach Anspruch 6 oder 7, **dadurch gekennzeichnet, dass** nach der Bildung der zweiten Kavität (34) eine Ätzstoppschicht (341), vorzugsweise Siliziumoxid, im Bereich der zu bildenden seismischen Masse (35) in die zweite Kavität (34) eingebracht wird.

9. Beschleunigungs- und Drucksensor mit einer Vorrichtung (1) gemäß einem der Ansprüche 1 bis 5, wobei der Beschleunigungssensor zur Detektion einer zur Substratebene der Vorrichtung (1) senkrechten Komponente der linearen Beschleunigung und/oder zur Detektion einer zur Substratebene der Vorrichtung (1) parallelen Komponente der Drehbeschleunigung vorgesehen ist.

## Claims

1. Micromechanical device (1) comprising a semiconductor material (10),
- wherein the semiconductor material (10) has a first sensor structure (20),
- wherein the first sensor structure (20) is provided for detecting a pressure,
- wherein the functionality of the first sensor structure (20) is based on a predetermined converter principle,
- wherein the semiconductor material (10) has a second sensor structure (30), wherein the second sensor structure (30) is provided for detecting an acceleration,
- wherein the functionality of the second sensor structure (30) is based on the same predetermined converter principle,
- wherein the first sensor structure (20) has a first membrane (21) introduced into the semiconductor material (10) and the second sensor structure (30) has a second membrane (31) introduced into the semiconductor material (10), wherein each of the membranes (21, 31) comprises at least one sensor region (22, 23, 32, 33) or is connected to at least one sensor region (22, 23, 32, 33),
**characterized in that**
the first sensor structure (20) has a hermetically sealed first cavity (24) in the semiconductor material (10) below the first membrane (21), and **in that** the second sensor structure (30) has a seismic mass (35) connected to the second membrane (31), wherein the second membrane (31) is closed.

2. Device (1) according to Claim 1, **characterized in that** the converter principle is based on the piezoresistive effect in a plurality of sensor regions (22, 23, 32, 33) of the semiconductor material (10).

3. Device (1) according to any of the preceding claims, **characterized in that** the seismic mass (35) is hermetically encapsulated, and/or that the second membrane (31) is provided in supported fashion, in particular by means of at least one lateral constriction (36).

4. Device (1) according to any of the preceding claims, **characterized in that** a circuit structure of an electronic circuit for evaluating and/or processing signals that issue from the sensor structures (20, 30) or are modified by the sensor structures (20, 30) is introduced into the semiconductor material (10), wherein the production of the circuit structure is preferably provided at least partly simultaneously with the production of the sensor structures (20, 30).

5. Device (1) according to any of the preceding claims, **characterized in that** the membranes (21, 31) substantially comprise a monocrystalline material, preferably monocrystalline silicon.

6. Method for producing a device (1) according to any of the preceding claims, **characterized in that,** in a first step, the membranes (21, 31) are introduced into the semiconductor material (10), preferably by means of a surface-micromechanical machining sequence, and **in that**, in a second step, the seismic mass (35) is structured, preferably by means of a bulk-micromechanical machining sequence.

7. Method according to Claim 6, **characterized in that,** for introducing the membranes (21, 31) into the semiconductor material (10), a partial region of the semiconductor material (10) is etched in porous fashion, preferably with a porosity of more than 50%, preferably of more than 80%, and **in that** the first cavity (24) and a second cavity (34) are formed by rearranging or dissolving out parts of the semiconductor material in the partial region etched in porous fashion.

8. Method according to Claim 6 or 7, **characterized in that** after the second cavity (34) has been formed, an etching stop layer (341), preferably silicon oxide, is introduced into the second cavity (34) in the region of the seismic mass (35) to be formed.

9. Acceleration and pressure sensor comprising a device (1) according to any of Claims 1 to 5, wherein the acceleration sensor is provided for detecting a component of the linear acceleration that is perpendicular to the substrate plane of the device (1) and/or for detecting a component of the angular acceleration that is parallel to the substrate plane of the device (1).

## Revendications

1. Dispositif micromécanique (1) qui présente un matériau semi-conducteur (10),
le matériau semi-conducteur (10) présentant une première structure de détecteur (20),
la première structure de détecteur (20) étant prévue pour détecter une pression,
le fonctionnement de la première structure de détecteur (20) reposant sur un principe prédéterminé de conversion,
le matériau semi-conducteur (10) présentant une deuxième structure de détecteur (30), la deuxième structure de détecteur (30) étant prévue pour détecter une accélération,
le fonctionnement de la deuxième structure de détecteur (30) reposant sur le même principe prédéterminé de conversion,
la première structure de détecteur (20) présentant une première membrane (21) formée dans le matériau semi-conducteur (10) et la deuxième structure de détecteur (30) présentant une deuxième membrane (31) formée dans le matériau semi-conducteur (10), chacune des membranes (21, 31) comprenant au moins une zone de détecteur (22, 23, 32, 33) ou étant reliée à au moins une zone de détecteur (22, 23, 32, 33),
**caractérisé en ce que**
la première structure de détecteur (20) présente une première cavité (24) fermée hermétiquement dans le matériau semi-conducteur (10) en dessous de la première membrane (21) et
**en ce que** la deuxième structure de détecteur (30) présente une masse sismique (35) reliée à la deuxième membrane (31), la deuxième membrane (31) étant fermée.

2. Dispositif (1) selon la revendication 1, **caractérisé en ce que** le principe de conversion repose sur l'effet piézo-résistif dans plusieurs zones de détecteur (22, 23, 32, 33) du matériau semi-conducteur (10).

3. Dispositif (1) selon l'une des revendications précédentes, **caractérisé en ce que** la masse sismique (35) est encapsulée hermétiquement et/ou **en ce que** la deuxième membrane (31) est soutenue, en particulier au moyen d'au moins un rétrécissement latéral (36).

4. Dispositif (1) selon l'une des revendications précédentes, **caractérisé en ce qu'**une structure de circuit électronique d'évaluation et/ou de traitement des signaux émis par les structures de détecteur (20, 30) ou modifiés par les structures de détecteur (20, 30) est formée dans le matériau semi-conducteur (10), la formation de la structure de circuit étant prévue au moins en partie en même temps que la formation des structures de détecteur (20, 30).

5. Dispositif (1) selon l'une des revendications précédentes, **caractérisé en ce que** les membranes (21, 31) comportent essentiellement un matériau monocristallin et de préférence du silicium monocristallin.

6. Procédé de fabrication d'un dispositif (1) selon l'une des revendications précédentes, **caractérisé en ce que** dans une première étape, les membranes (21, 31) sont formées dans le matériau semi-conducteur (10), de préférence au moyen d'une succession de traitements micromécaniques de surface, et **en ce que** dans une deuxième étape, la masse sismique (35) est structurée, de préférence au moyen d'une succession de traitements micromécaniques de volume.

7. Procédé selon la revendication 6, **caractérisé en ce que** pour former les membranes (21, 31) dans le matériau semi-conducteur (10), une partie du matériau semi-conducteur (10) est attaquée de manière à devenir poreuse, de préférence jusqu'à une porosité de plus de 50 % et de préférence de plus de 80 %, et **en ce que** la première cavité (24) et une deuxième cavité (34) sont formées par déplacement ou enlèvement de parties du matériau semi-conducteur dans la zone attaquée de manière à devenir poreuse.

8. Procédé selon les revendications 6 ou 7, **caractérisé en ce qu'**après la formation de la deuxième cavité (34), une couche (341) d'arrêt de gravure, de préférence en oxyde de silicium, est réalisée dans la deuxième cavité (34) dans la zone occupée par la masse sismique (35) à former.

9. Détecteur d'accélération et de pression doté d'un dispositif (1) selon l'une des revendications 1 à 5, le détecteur d'accélération étant prévu pour détecter une composante d'accélération linéaire perpendiculaire au plan du substrat du dispositif (1) et/ou pour détecter une composante d'accélération en rotation parallèle au plan du substrat du dispositif (1).
